# EUROPEAN PATENT APPLICATION

(11) **EP 4 718 298 A1**
(43) Date of publication of application: **01.04.2026**
(21) Application number: 25202591.1
(22) Date of filing: 16.09.2025
(51) Int. Cl.: G06F 21/53, G06F 21/57, G06F 21/64, G06F 21/74

(54) **APPARATUS, METHOD, MACHINE-READABLE MEDIUM TO CONTROL AND AUTHORISE MIGRATION OF WORKLOADS BETWEEN TRUSTED EXECUTION ENVIRONMENTS**

(30) Priority: 25.09.2024 US 202418895476
(71) Applicant: INTEL Corporation, Santa Clara, CA 95054 (US)
(72) Inventor: SCARLATA, Vincent R., Beaverton, 97006 (US); SMITH, Ned M., Beaverton, 97006 (US)
(74) Representative: 2SPL Patentanwälte PartG mbB

(57) **Abstract**

Provided is an apparatus including interface circuitry, machine-readable instructions, and processing circuitry to execute the machine-readable instructions to decide on a migration of a workload from a first trusted execution environment (TEE) to a second TEE according to a migration policy. The migration policy is embedded into support infrastructure of the first TEE.

## Description

### Background

In confidential computing (CC), a workload (WL) may migrate from one trusted execution environment (TEE) to another. Such a migration may be performed by a migration orchestrator which manages the migration as an external entity. Another possibility is based on a globally understood policy that is applied to all the involved TEEs, such that they must have identical security levels or attestation signatures.

### Brief description of the Figures

Some examples of apparatuses and/or methods will be described in the following by way of example only, and with reference to the accompanying figures, in which
Fig. 1 depicts a block diagram of an apparatus according to the present disclosure;
Fig. 2 depicts a flowchart of a method according to the present disclosure;
Fig. 3 depicts a flowchart of a method for generating attestation evidence according to the present disclosure;
Fig. 4 depicts an evidence chain according to the present disclosure; and
Fig. 5 depicts a flow chart of a method for deciding on and carrying out a migration according to the present disclosure.

### Detailed Description

Some examples are now described in detail with reference to the enclosed figures. However, other possible examples are not limited to the features of these embodiments described in detail. Other examples may include modifications of the features as well as equivalents and alternatives to the features. Furthermore, the terminology used herein to describe certain examples should not be restrictive of further possible examples.

Throughout the description of the figures same or similar reference numerals refer to same or similar elements and/or features, which may be identical or implemented in a modified form while providing the same or a similar function. The thickness of lines, layers and/or areas in the figures may also be exaggerated for clarification.

When two elements A and B are combined using an "or", this is to be understood as disclosing all possible combinations, i.e. only A, only B as well as A and B, unless expressly defined otherwise in the individual case. As an alternative wording for the same combinations, "at least one of A and B" or "A and/or B" may be used. This applies equivalently to combinations of more than two elements.

If a singular form, such as "a", "an" and "the" is used and the use of only a single element is not defined as mandatory either explicitly or implicitly, further examples may also use several elements to implement the same function. If a function is described below as implemented using multiple elements, further examples may implement the same function using a single element or a single processing entity. It is further understood that the terms "include", "including", "comprise" and/or "comprising", when used, describe the presence of the specified features, integers, steps, operations, processes, elements, components and/or a group thereof, but do not exclude the presence or addition of one or more other features, integers, steps, operations, processes, elements, components and/or a group thereof.

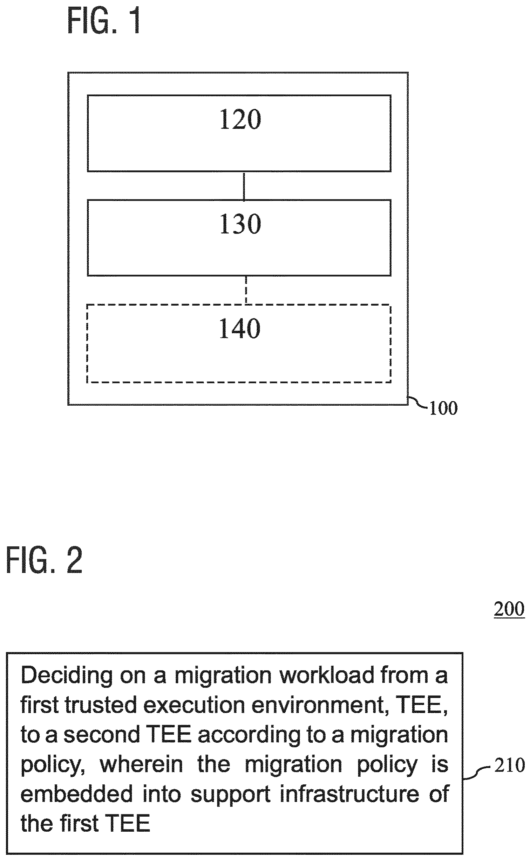

Fig. 1 illustrates a block diagram of an example of an apparatus 100 (or device 100). The apparatus 100 includes circuitry that is configured to provide the functionality of the apparatus 100. For example, the apparatus 100 of Fig. 1 includes interface circuitry 120, processing circuitry 130 and (optional) storage circuitry 140. For example, the processing circuitry 130 may be coupled with the interface circuitry 120 and optionally with the storage circuitry 140.

For example, the processing circuitry 130 may be configured to provide the functionality of the apparatus 100, in conjunction with the interface circuitry 120. For example, the interface circuitry 120 is configured to exchange information, e.g., with other components inside or outside the apparatus 100 and the storage circuitry 140. Likewise, the device 100 may comprise means configured to provide the functionality of the device 100.

The components of the device 100 are defined as component means, which may correspond to, or implemented by, the respective structural components of the apparatus 100. For example, the device 100 of Fig. 1 comprises means for processing 130, which may correspond to or be implemented by the processing circuitry 130, means for communicating 120, which may correspond to or be implemented by the interface circuitry 120, and (optional) means for storing information 140, which may correspond to or be implemented by the storage circuitry 140. In the following, the functionality of the device 100 is illustrated with respect to the apparatus 100. Features described in connection with the apparatus 100 may thus likewise be applied to the corresponding device 100.

In general, the functionality of the processing circuitry 130 or means for processing 130 may be implemented by the processing circuitry 130 or means for processing 130 executing machine-readable instructions. Accordingly, any feature ascribed to the processing circuitry 130 or means for processing 130 may be defined by one or more instructions of a plurality of machine-readable instructions. The apparatus 100 or device 100 may comprise the machine-readable instructions, e.g., within the storage circuitry 140 or means for storing information 140.

The interface circuitry 120 or means for communicating 120 may correspond to one or more inputs and/or outputs for receiving and/or transmitting information, which may be in digital (bit) values according to a specified code, within a module, between modules or between modules of different entities. For example, the interface circuitry 120 or means for communicating 120 may comprise circuitry configured to receive and/or transmit information.

For example, the processing circuitry 130 or means for processing 130 may be implemented using one or more processing units, one or more processing devices, any means for processing, such as a processor, a computer or a programmable hardware component being operable with accordingly adapted software. In other words, the described function of the processing circuitry 130 or means for processing 130 may as well be implemented in software, which is then executed on one or more programmable hardware components. Such hardware components may comprise a general-purpose processor, a Digital Signal Processor (DSP), a micro-controller, etc.

For example, the storage circuitry 140 or means for storing information 140 may comprise at least one element of the group of a computer readable storage medium, such as a magnetic or optical storage medium, e.g., a hard disk drive, a flash memory, Floppy-Disk, Random Access Memory (RAM), Read Only Memory (ROM), Programmable Read Only Memory (PROM), Erasable Programmable Read Only Memory (EPROM), an Electronically Erasable Programmable Read Only Memory (EEPROM), or a network storage.

The processing circuitry 130 is configured to decide on a migration of a workload from a first TEE to a second TEE according to a migration policy.

A TEE may be provided within or by the processing circuitry and create isolated and secure areas for executing sensitive computations and storing confidential data. A TEE may be hosted within a confidential computing environment (CCE), such that CC of a WL may be carried out.

Confidential computing may refer to computing, i.e., processing of data, which is carried out in such a secure environment since a CCE may provide hardware-based security features, both within the processing circuitry and across the broader computing system comprising the processing circuitry, to protect data in use from unauthorized access and tampering.

For example, memory encryption may be used for ensuring that the contents of the system memory (e.g., RAM) are encrypted to protect data even if physical access to the memory is obtained. Further, features such as I/O isolation secure input/output operations, preventing data leakage during transit between the processing circuitry and peripheral devices may be used.

Together, these processing circuitry and system-level features may provide a robust foundation for one or more TEEs, ensuring that sensitive information and computations (or more generally: workloads) are protected throughout their lifecycle. The TEEs operating on the system software relies on the underlying system software for its initialization, execution, and management. The system software provides the necessary services and interfaces for the TEE to function securely and efficiently.

A CCE may include one or more hierarchical layered environments. Each of the one or more layered environments may be specifically designed to perform distinct computing functions within the CCE. These layers are hierarchically structured such that a lower layer may support and attest to the integrity of a layer above it, ensuring a continuous chain of trust throughout the CCE. For example, a lower layered environment may receive a measurement from the environment layered above and sign it with its private key. The one or more layered environments may be categorized into layers based on their functions within the CCE. The layers may be logically and/or hardware-separated based on their specific functions, roles, and responsibilities within the CCE, ensuring a structured and secure computing framework. For example, there may be one or more layers designed to perform foundational security functions, such as a root of trust (RoT), as will be discussed below. The foundational security provides the essential security mechanisms and trust anchors upon which the entire framework is built. For example, the foundational security framework may comprise layers responsible for secure boot, cryptographic key management, and integrity verification. One example is the Device Identifier Composition Engine (DICE), which creates a chain of trust through layered identities and attestation. DICE may be defined in the specification "DICE Attestation Architecture" by the Trusted Computing Group, Version 1.1, Revision 0.18, January 6, 2024.

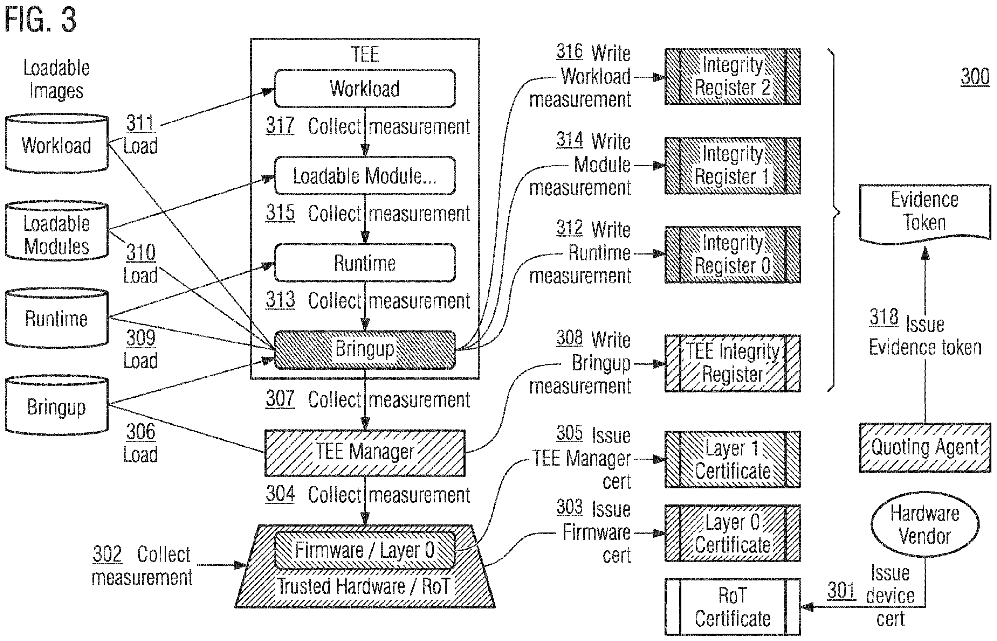

Attestation may refer to a mechanism that reports on protection and integrity properties of the WL-hosting TEE and also on target environments (TE), such as the RoT and layers in between (e.g., firmware layer, integrity register layer, and the like). Attestation reports may be collected at importing events in the lifetime of the WL, such as whenever an image is updated, when the WL is migrated, or the like. A detailed attestation mechanism will be described under reference of Fig. 3.

Migration may refer to a case of transferring a workload from one TEE to another TEE, i.e., from a first TEE to a second TEE, which may be provided within the same CCE or within different CCEs. There may be various cases as to why a migration may be necessary. For example, the second TEE may have more computing capacity or memory capacity than the first one and thus, the workload might be finished faster. Another example may be that the second TEE has higher security standards and may thus be harder to compromise. Another example may be that a minimum security standard may not be provided anymore by the first TEE and thus, the workload must be processed in a TEE that fulfills the security requirements.

For example, all of the TEEs participating in a CC MESH may know and recognize the (common) migration policy. They may also maintain a log/history of all migration policies involving all layers of the TEE from RoT to WL. If the TEE itself or any of its layers beneath (to the RoT) have had their minimum SVN (security version number) changed (for example, a bug is identified in a security critical portion of the component), the STEE (source TEE or first TEE) should not migrate to a DTEE (destination TEE or second TEE) that is at an SVN lower than the minSVN. This policy can be enforced directly by all the TEEs in a MESH so long as the migration TEE is aware of the minSVN setting for the MESH's TEEs.

As indicated above, the migration is decided according to a migration policy. A migration policy may include a set of one or more of instructions, rules, measurement values, or the like, according to which a migration is allowed. For example, the migration policy may indicate requirements of the second TEE to allow the migration, such as common vulnerabilities and exposures (CVE) of the second TEE, a security version number (SVN) of the second TEE, or any (other) attestation evidence that needs to be determined based on the second TEE to allow the migration. Hence, the decision may include allowing or denying the migration, without limiting the present disclosure in that regard. To make such a decision, the first TEE (or a support TEE for the first TEE, such as the first migration agent discussed herein) may query the second TEE about its protection and integrity properties, for example. Based on a comparison of these properties (e.g., with expected properties), it may be determined if the second TEE is suitable for the migration.

According to the present disclosure, the migration policy is embedded into support infrastructure of the first TEE. Support infrastructure may refer to any hardware in the CCE that is suitable for hosting a TEE, such that the migration policy may be included in a TEE. Embedding may refer to a type of hard-coding the migration policy into the support infrastructure such that the TEE including the migration policy (only) hosts an image of the migration policy. For example, the embedding may be done in a similar way as the RoT, such that it might not be possible to change it anymore.

In some examples, the support infrastructure of/for the first TEE includes (or hosts) a third TEE. Likewise, there may be support infrastructure of/for the second TEE, which may include a fourth TEE. The respective (support) TEEs may host respective migration agents, i.e., the third TEE may host a migration agent for the first TEE and the fourth TEE may host a migration agent for the second TEE.

In such examples, the migration policy may be embedded in at least one of the third and the fourth TEE, such that at least one of the first migration agent and the second migration agent can access the migration policy and thus carry out the migration, if it is decided to allow the migration or otherwise, to enforce the migration policy and not allow the migration.

Thereby, each of the first and the second TEE (or: each TEE that is configured to process a workload) may be associated (connected) with a migration agent that is configured to carry out a migration policy. In other words, a migration agent may be provided for each TEE that is configured to process a workload.

In some examples, the support infrastructure (of at least one of the first and the second TEE) includes a register for storing previous migrations. A register may include a plurality of gates which, for storing the previous migrations are XORed (concatenated with an exclusive OR (XOR) logic) when a new migration to or from the respective TEE has taken place. Such registers may be used for verifying an integrity of one or more of the first TEE and the second TEE for deciding on the migration. For example, an attestation value of the register may be used for verifying the integrity. However, the present disclosure is not limited to XORing only when a migration has taken place. Also, denying or not allowing a migration request may be registered in the same or a different register.

In some examples, one or more of the first migration agent and the second migration agent is configured to extend the register based on the migration. For example, the first migration agent may extend the register for the first TEE and the second migration agent may extend the register for the second TEE, without limiting the present disclosure in that regard since, in some examples, the second migration agent may extend the register for the first TEE and the first migration agent may extend the register for the second TEE. This may depend on which migration agent carries out the migration. For example, the migration policy may require that the second migration agent carries out the migration and decides on the migration policy. In such a case, the second migration agent may then extend the register of the first and the second TEE. On the other hand, a mutual register may be provided for the first and the second TEE.

In some examples, the register includes an attestation history of previous migrations. For example, attestation values (or evidence) may be stored in the register. The integrity may be verified by reading the stored attestation values and comparing them to expected attestation values, for example.

Attestation evidence for verifying the integrity of a CCE or at least one of its layers may be a comprehensive set of data used to verify the integrity and security of a CCE/TEE and/or one or more of its layered environments. The attestation evidence may be used in an attestation process to provide verifiable proof that the CCE/TEE and/or its components are secure, untampered with, and operating as expected, allowing the verifier to establish trust in the CCE's/TEE's integrity and security status. Generating attestation evidence may comprise creating a cryptographic hash of the component's state (measurement) and then signing this hash with a private key to produce a digital signature, ensuring the integrity and authenticity of the measurement. Attestation evidence may comprise the measurement and the cryptographic signature of the measurement.

A measurement may represent the state of a software and/or hardware component of the CCE/TEE at a specific point in time. For example, a measurement may be a digest that represents the state of any software and/or hardware component of the CCE/TEE at that specific point in time. A measurement of a software (including firmware) component may comprise a cryptographic hash of the software. This hash may represent the binary executable code, configuration data, and/or initial state data of that software or software component. The hash is generated by reading the raw binary data of the system software components and processing it through a cryptographic hash function (e.g., SHA-256) to produce a fixed-size hash value that uniquely represents the state of the component or layer at that point in time. For example, the measurement of the system software may be based on an image of the system software. The measurement of the system image may include a cryptographic hash of the binary executable code, configuration data, and initial state data of the system software or system software components, such as the BIOS/UEFI, bootloader, and operating system kernel.

For example, a measurement may be performed to any layer of a layered environment that is constituted by a CCE (including the workload, software, firmware and/or or hardware). For example, the measurement may comprise data about a state, behavior, and/or configuration of the of one or more layered environments

For example, a measurement may include a digest of an image of any layer of the CCE. That is, the measurement of the CCE may include a cryptographic hash of the binary executable code, configuration data, and initial state data of the CCE or one or more layered environments of the CCE. If the CCE comprises more than one environment/layer, the measurement of the CCE may refer to a measurement of any of these layered environments. For example, if the CCE is a virtual machine (VM) environment, the measurement of the virtual machine environment may comprise a cryptographic hash of a VM's executable code, configuration settings, runtime state, virtual hardware settings, and running processes. For example, the measurement may be a measurement of a quoting environment which includes a cryptographic hash of attestation reports and executable code of quoting processes. In some examples, the measurements of the VM environment comprises measurements of the virtual machine monitor (VMM) managing a virtual machine of the virtual machine environment. These measurements may comprise cryptographic hashes of the VMM's binary executable code, configuration data, and runtime state. This ensures the integrity and authenticity of the VMM managing the virtual machine of the VM environment. However, the present disclosure shall not be limited to any type of environment that is measured.

In some examples, the register is protected by a trusted entity. For example, the trusted entity may be hardware-based and may store a private key to encrypt the environment(s). The private key may be stored away from system software such that an attack on the system software does not yield the private key.

For example, the trusted entity includes one or more of a RoT and a TEE hypervisor.

A RoT (of the processing circuitry 130) may refer to a secure, foundational hardware component which may be embedded within the processing circuitry 130 itself, thereby establishing a trusted computing base for the computing system in which it is included. The RoT may provide critical security functions such as secure boot, cryptographic key management, and attestation to ensure system integrity. The RoT may have a unique device ID key, for example certified by the processing circuitry manufacturer, linking the hardware processing circuitry to this unique verified ID. The RoT may be provided for one or more TEE, like the first and/or second TEE. That is, it may serve as a common RoT for a plurality of CCEs. On the other hand, each TEE may use its own RoT.

As indicated above, integrity may be verified based on at least one measurement. For example, the RoT may receive the measurements/evidence of the system software and then verify these measurements, for example, by comparing the hash of the measurement to a predetermined and stored hash value. If the measurement of the system software is valid, the RoT may sign the verified measurement with the private key, thereby generating attestation evidence. Signing the measurement with the private key involves creating a digital signature for the measurements. This process uses the private key to encrypt the hash, thus producing a unique digital signature. The digital signature may ensure the authenticity and integrity of the measurement. The attestation evidence may thus represent the measurement of the system software and the digital signature. Hence, the attestation evidence may constitute a secure, verifiable record that reflects the integrity of the system software at a specific point in time.

A TEE hypervisor may refer to a software that creates and manages virtual machines in a TEE. It may be provided between the hardware and the VMs, controlling the distribution of resources like CPU, memory, and storage to each VM. A TEE hypervisor may leverage the security features of the TEE to provide additional protection. It may ensure that the VMs can run securely, even if the underlying operating system or other VMs are compromised. It may do so by isolating the VMs in the TEE, where the integrity and confidentiality of the VMs can be guaranteed.

Accordingly, the processing circuitry 130 may be part of a trusted platform (including the RoT, TEE hypervisor, etc.). Such a trusted platform may be a hierarchically organized (or layered) integrated computing system comprising hardware, firmware and/or software components designed to establish and maintain a secure computing environment. It may include the RoT, firmware, one or more confidential computing environments, trusted platform manager, and/or other critical elements that work together to enforce security policies, perform secure boot processes, generate and manage cryptographic keys, and collect and verify measurements and attestation reports. The trusted platform manager may manage the plurality of different confidential computing environments (such as enclaves, trusted domains, and virtual machines), ensuring the security and integrity of each environment within the platform.

Another layer of the CCE may be the Quoting Environment (QE) or quoting agent (QA), which may sign measurements from higher layers and is itself attested by the lower layers of the foundational framework. The QE or QA is configured to generate cryptographic proofs (quotes) to verify the integrity of the layers above it. For example, layered environments above the QE may rely on these attestation proofs to ensure their secure operation.

In some examples, the migration policy indicates if the first migration agent or the second migration agent is to be configured for enforcing the migration policy.

Depending on which migration agent shall enforce the migration policy, different approaches may need to be taken. For example, if the second migration agent is configured for enforcing the migration policy, the machine-readable instructions may further include instructions to supply a migration image to the second migration agent. The migration image may include one or more of an image of the first TEE, an image of a register storing previous migrations, and attestation evidence. Based on such information, the second migration agent may verify the integrity of the migration and decide whether the migration shall be allowed (or not). For example, the attestation evidence may be compared with a signed hash, as discussed above. If the comparison is successful, the instructions may further include verifying the migration image by the second migration agent.

On the other hand, if the first migration agent is configured for enforcing the migration policy, the machine-readable instructions further include instructions to acquire attestation evidence by the first migration agent, as discussed above.

In some examples, the migration policy includes an expected attestation value of one or more of the first and the second TEE. As indicated above, there may be different types of attestation values (or evidence) - depending on the layer for which the attestation is carried out. In such examples, if a measured attestation value (i.e., a signed measurement, as discussed herein) corresponds to the expected attestation value, the machine-readable instructions further include instructions to decide that the migration is allowed. In other words, if the measurement results are verified to be authentic (e.g., by the RoT, the quoting agent/entity, or the like), based on the comparison, it is decided to allow the migration. Otherwise, the migration may be denied.

In some examples, the machine-readable instructions further include instructions to override the migration policy based on a migration policy provisioned by an orchestration entity. An orchestration entity (or migration orchestrator) may refer to an external entity which may be used for more complex migration policies. The orchestration entity may be based on a software tool or service for managing and automating the process of moving workloads from one environment to another.

The overriding may include an amending of the (original) migration policy or a complete replacement of it. On the other hand, overriding may refer to an adding of more policies or rules to the embedded migration policy.

According to the present disclosure, a potential single point of attack may be excluded, such as a central migration orchestrator which may be compromised, and as part of compromise applies policies that destroy protection and integrity safeguards. One way to prevent a single point of attack from nullifying CC integrity is to embed policies within the fabric of the CC infrastructure. The embedding of an integrity policy in CC is also referred to as CC MESH in the present disclosure since all the environments have access and agree on the same integrity policy.

Hence, in contrast to previous techniques for migration which rely on a simple globally understood policy (for example, that says that a DTEE (destination TEE, also referred to as second TEE) must have an identical attestation signature as a STEE (source TEE, also referred to as first TEE) or the migration will fail), the present disclosure provides a mechanism which uses simpler requirements for deciding on the migration without sacrificing the security of the migration. Thereby, overly constraining migration policies as in the previous technique are avoided.

Moreover, the present disclosure does not rely on a central (and possibly) external migration orchestrator which may be compromised and constitutes a single point of attack. However, using an orchestrator for more complex migration policies is still possible. Moreover, the present disclosure provides a baseline level of operational integrity regardless of users or de-ployments.

Furthermore, migration of a currently secure TEE to another platform which does not fulfill security requirements may be prevented and thus, attacks which would have been possible in the other platform may be prevented likewise.

Generally, the principles of the present disclosure may be carried out based on migration agents associated with respective TEEs to perform (or to prevent) migration. For example, the first migration agent may obtain an attestation of the second migration agent, may compare the SVN and/or CVE information against a minSVN and/or CVE migration policy. If the SVN is not high enough and/or if there are CVEs that are not on a list of expected CVEs (e.g., the expected list may be null - meaning no second TEE with CVEs is a candidate for migration), the first migration agent may enforce the migration policy by refusing to deliver the first TEE (or the workload) to the second migration agent/second TEE. Alternatively, the first migration agent may trust the second migration agent to enforce the migration policy such that the second migration agent refuses to complete the migration.

The MAs (migration agents) in the CC MESH may maintain a log of migration policies that have been configured to them. The log may include a list including each policy that has ever been configured, for example. In other words, the MAs may maintain a history of all configured migration policies. A digest of the migration policy list may be integrity protected by a trusted entity such as a RoT. The migration RoT (MRoT) may protect the integrity of a Migration Policy Memory Register (MPMR) - which is an integrity register that can only be extended by a designated MA. The MRoT may include the MPMR value in an attestation report that a first MA or second MA may read to determine if there is a TEE-level migration policy at play.

The MAs may recognize well-known migration policies by their clear-text value (such as "minSVN=2") or by a digest of the clear-text value (e.g., 0xFFEEDDCC...). Each MA in the MESH is provisioned with the well-known migration policies, typically by the TEE manufacturer. The manufacturer may also implement a system for informing the MAs regarding the minimum SVN for a given TEE, such as a firewall and/or patch infrastructure update, where the update is authenticated by a key provisioned by the manufacturer.

When a minSVN notification is sent to the MESH, the Mas may keep track of the minSVNs. When an MA is instructed to facilitate a TEE migration, the attestation evidence/results may be compared to the minSVNs. If a component has an SVN that is less than the minSVN, the migration policy for "minSVN=x"; where x is less than minSVN, may be applied such that the MA prevents the TEE from being migrated.

The MA may record the migration policies that were applied, whether successfully or unsuccessfully migrated. A size efficient representation of the list may use an integrity register called Migration Policy Memory Register (MPMR). A migration policy may be a document containing migration policy statements in a structure language such as CDDL, JSON, or the like. Each document can be hashed and the hash extended into an MPMR.

The resulting digest may be included in an attestation evidence report (AER) for the MA or as a stand-alone migration integrity report (MIR). The AER/MIR may be digitally signed by a key or token generated by a quoting agent to protect the integrity of the migration policy log (or MPMR) and to allow authentication of the log.

A DMA (or second migration agent) may authenticate an MIR before enforcing a migration policy. An SMA (or first migration agent) may ask or query the RoT to authenticate the migration log or MPMR directly using system calls, command interfaces or micro instructions.

Further details and aspects are mentioned in connection with the examples described below. The example shown in Fig. 1 may include one or more optional additional features corresponding to one or more aspects mentioned in connection with the proposed concept or one or more examples described below (e.g., Figs. 2 - 5).

Fig. 2 illustrates a flowchart of an example of a method 200. The method 200 may, for instance, be performed by an apparatus as described herein, such as apparatus 100. The method 200 includes deciding on a migration workload from a first TEE to a second TEE according to a migration policy, as discussed herein. The migration policy is embedded into support infrastructure of the first TEE, as discussed herein.

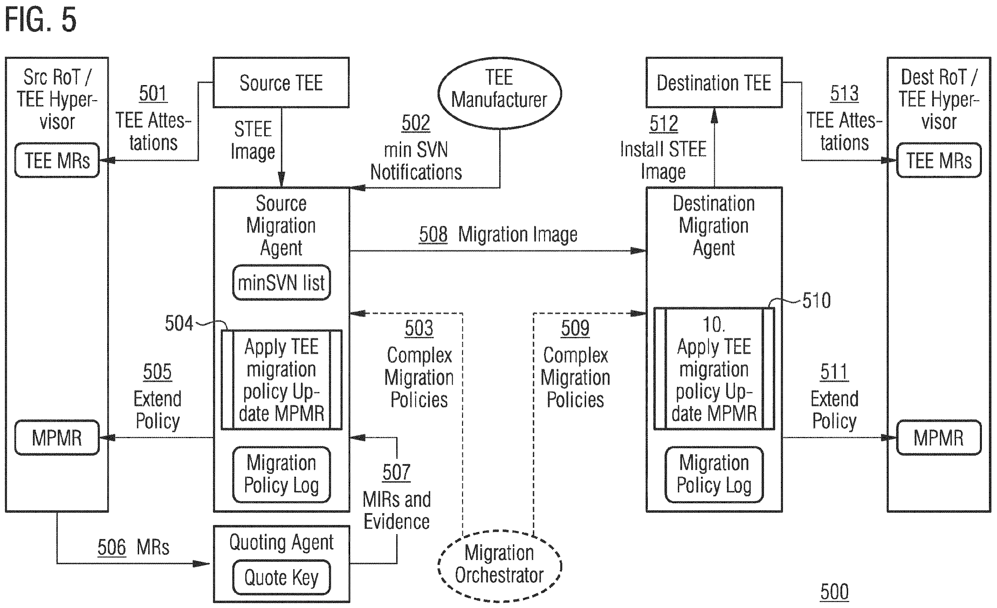

More details and aspects of the method 200 are explained in connection with the proposed technique or one or more examples described above, e.g., with reference to Fig. 1. The method 300 (discussed under reference of Fig. 3), the method 400 (discussed under reference of Fig. 5), and the method 500 (discussed under reference of Fig. 5) may comprise one or more additional optional features corresponding to one or more aspects of the proposed technique, or one or more examples described above.

Fig. 3 depicts a flowchart of a method 300 for generating an evidence token.

A hardware vendor issues, 301, a device certificate or RoT certificate which is used to sign measurement values, as discussed above. When a measurement of the state of the firmware (or layer 0) is collected by the RoT, 302, the RoT signs this measurement based on the RoT certificate and thus, issues, 303, a firmware certificate (also referred to as layer 0 certificate).

Correspondingly, a layer 1 certificate (or TEE manager certificate) is issued based on a measurement, 304, of the state of the firmware/layer 0. This measurement is signed by the firmware/layer which issues, 305, the layer 1 certificate.

As can already be taken from this description, a certificate of a layer is based on a measurement of at least one layer below the layer for which the certificate is to be issued. When the TEE manager hosts a TEE, i.e., loads, 306, a bringup of the TEE, the bringup collects, 307, a measurement of the TEE manager which signs (or writes), 308, this measurement, thereby generating a TEE integrity register.

The bringup is responsible for other functions of the TEE, such as runtime, loadable modules, and workload, which are loaded in corresponding steps, i.e. the runtime load is performed at 309, the loadable modules load is performed at 310, and the workload load is performed at 311. For issuing (writing), 312 an integrity register 0, the runtime layer collects, 313, a measurement of the bringup, which the bringup signs accordingly. For issuing (writing), 314, an integrity register 1, the loadable modules layer collects, 315, a measurement of the runtime layer. For issuing (writing), 316, an integrity register 2, the workload layer collects, 317, a measurement of the loadable modules layer.

Each measurement is signed by the bringup layer, which issues the integrity registers 0, 1, and 2, in this embodiment.

As indicated above, a quoting agent is utilized which issues, 318, an evidence token based on the TEE integrity register, and the integrity registers 0, 1, and 2. An evidence token is a hashed value (a summary) of a plurality of attestation evidence, i.e., of all the integrity registers, in this embodiment. By using an evidence token, the evidence of multiple layers can be summarized, and integrity of the multiple layers can be verified at once.

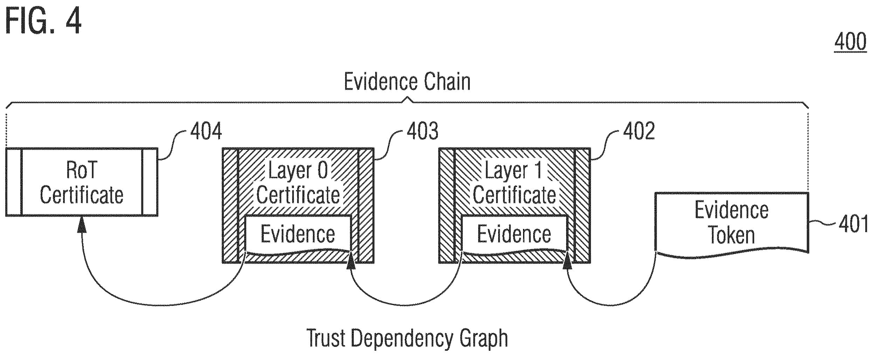

This process is briefly discussed under reference of Fig. 4, which displays an evidence chain 400.

As can be taken from Fig. 4, the evidence token 401 is based on evidence of the layer 1 certificate 402, which is in turn based on evidence of the layer 0 certificate 403, which is based on the RoT certificate 404. Since a lower layer always signs a measurement with its certificate, the integrity of the respective upper layer can be ensured.

Fig. 5 depicts a flowchart of a method 500 for migrating a workload from a first TEE (source TEE or STEE) to a second TEE (destination TEE or DTEE) while using a first migration agent (source migration agent or SMA) and a second migration agent (destination migration agent or DMA). The flowchart includes entities used as a CC MESH (or TEE MESH) system, as described herein, that supports and uses embedded migration policies. It optionally includes a migration orchestrator supplying complex policies that may apply only to workload, runtime and other components not supplied by a TEE manufacturer. The TEE manufacturer may also supply complex migration policies via a Migration Orchestrator in addition to embedded migration policies.

The STEE supplies, 501, integrity measurements (TEE attestations) to a source RoT or a TEE hypervisor that protects the integrity of the measurements from external or internal threats.

A TEE Manufacturer (TMfr) supplies, 502, notifications of minSVN changes (or other attestation values) for the TEEs it manufactures (which may also include minSVN notifications for RoT/TEE Hypervisor or other components upon which the STEE depends for trustworthy operation). Based on the notification, a minSVN list and a migration policy log in the SMA is updated.

Optionally, 503, a migration orchestrator supplies complex migration policies that may apply to other components besides the TEE migration policies.

The SMA responds, 504, to an STEE migration request by obtaining the minSVN notifications and migration policies that apply. The SMA determines if the actual STEE SVN is lower than the minSVN and whether an embedded migration policy for SVN directs that migration of STEE should be prevented upon violation of minSVN. An embedded migration enforcement policy directs whether the SMA or the DMA should enforce prevention of migration upon violation of the migration policy. If the SMA enforces the migration policy, the migration (at 508) is halted.

At 505, the MPMR (migration policy memory register) with the migration policy applied.

At 506, the integrity registers (or memory register) for the STEE and SMA MPMR are collected.

At 507, migration integrity reports (MIRs) and attestation evidence for the STEE are supplied to the SMA. Optionally, the attestation evidence for the SMA and QA (quoting agent) may be supplied to the SMA.

At 508, the STEE image is collected for migration and included into a migration bundle along with the migration policy log, which constitutes an MIR, and evidence. If the migration policy directed that the migration enforcement (stopping the migration) is applied by the SMA, then the migration image is not supplied to the DMA, as discussed above.

Optionally, 509, the complex migration policies are be supplied to a DMA.

The DMA verifies, 510, the migration image and processes it. The migration policy that was applied by the SMA is verified. The applied policy is added to the migration policy log. If the migration enforcement policy directs the DMA to enforce the policy and the minSVN is violated the DMA refuses to install the STEE image into the DTEE.

The digest of the migration policy applied is extended, 511, to the destination RoT/TEE hypervisor protected MPMR.

At 512, the DMA installs the STEE image into the DTEE and, at 513, the newly migrated DTEE attestation evidence is collected.

In addition, the following should be noted:
The MPMR may contain digests of the migration polices that were applied as part of a migration process. Both the source and destination migration agents may contribute the policies they applied. The previous entries in the migration log (MPMR) need not be removed but may be archived, for example, by a Migration Orchestrator or within one of the STEE or DTEE. However, the integrity of the complete log is protected by the MPMRs in the source and destination RoT/TEE hypervisors. The integrity of the MPMR across the migration is ensured by the MIR signing key. The MIR signing key may be wielded by a quoting agent, it may be the same key as is used to protect evidence or it may be a dedicated key for protecting the MPMR. The DMA initializes the destination MPMR using the source MPMR. The extend operation in 511 therefore extends the full history of the MPMR regardless of how many prior migration events have been applied.

The above description of Fig. 5 is based on a migration policy that relies on a minSVN, but it should be noted that the present disclosure is not limited in that regard. For example, a manufacturer may track the CVEs that are issued against a TEE (or any of the components the TEE depends on). A CVE migration policy may be a set of CVEs that are not allowed for a migration. The attestation endorsement may contain a list of CVEs that affect a particular component. Therefore, the MA may check the simple migration policies for a specific CVE (or list of CVEs) in a policy against the known CVEs. The set of embedded migration policies may be limited by the resources available to the MAs in the MESH. All MAs in the MESH must agree to the common set for the MESH to uniformly enforce a blanket migration policy, in some examples. Hence, a migration orchestrator may be helpful in delivering the MESH migration policy updates, but the MESH MAs rely on the TEE manufacturer's provisioned trust anchor(s) for validating MESH migration policy updates.

In the following, some examples of the proposed technique are presented:
An example (e.g., example 1) relates to an apparatus comprising interface circuitry, machine-readable instructions and processing circuitry to execute the machine-readable instructions to decide on a migration of a workload from a first trusted execution environment, TEE, to a second TEE according to a migration policy, wherein the migration policy is embedded into support infrastructure of the first TEE.

Another example (e.g., example 2) relates to a previous example (e.g., example 1) or to any other example, wherein the support infrastructure of the first TEE includes a third TEE, and wherein support infrastructure of the second TEE includes a fourth TEE, wherein the third TEE hosts a first migration agent for the first TEE, wherein the fourth TEE hosts a second migration agent for the second TEE, and wherein the migration policy is embedded in one or more of the third and the fourth TEE.

Another example (e.g., example 3) relates to a previous example (e.g., example 2) or to any other example, wherein the support infrastructure includes a register for storing previous migrations, wherein the register is used for verifying an integrity of one or more of the first TEE and the second TEE for deciding on the migration.

Another example (e.g., example 4) relates to a previous example (e.g., example 3) or to any other example, wherein one or more of the first migration agent and the second migration agent is configured to extend the register based on the migration.

Another example (e.g., example 5) relates to a previous example (e.g., any one of examples 3 or 4) or to any other example, wherein the register includes an attestation history of previous migrations.

Another example (e.g., example 6) relates to a previous example (e.g., any one of examples 3 to 5) or to any other example, wherein the register is protected by a trusted entity.

Another example (e.g., example 7) relates to a previous example (e.g., example 6) or to any other example, wherein the trusted entity includes one or more of a root of trust and a **TEE** hypervisor.

Another example (e.g., example 8) relates to a previous example (e.g., any one of examples 1 to 7) or to any other example, wherein the migration policy indicates if the first migration agent or the second migration agent is to be configured for enforcing the migration policy.

Another example (e.g., example 9) relates to a previous example (e.g., example 8) or to any other example, wherein, if the second migration agent is configured for enforcing the migration policy, the machine-readable instructions further comprise instructions to: supply a migration image to the second migration agent, wherein the migration image includes one or more of an image of the first TEE, an image of a register storing previous migrations, and attestation evidence; and verify the migration image by the second migration agent.

Another example (e.g., example 10) relates to a previous example (e.g., example 8) or to any other example, wherein, if the first migration agent is configured for enforcing the migration policy, the machine-readable instructions further comprise instructions to: acquire attestation evidence by the first migration agent.

Another example (e.g., example 11) relates to a previous example (e.g., any one of examples 1 to 10) or to any other example, wherein the migration policy includes an expected attestation value of one or more of the first and the second TEE, and wherein, if a measured attestation value corresponds to the expected attestation value, the machine-readable instructions further comprise instructions to: decide that the migration is allowed.

Another example (e.g., example 12) relates to a previous example (e.g., any one of examples 1 to 11) or to any other example, wherein the machine-readable instructions further comprise instructions to: override the migration policy based on a migration policy provisioned by an orchestration entity.

An example (e.g. example 13) relates to a method including: deciding on a migration of a workload from a first trusted execution environment, TEE, to a second **TEE** according to a migration policy, wherein the migration policy is embedded into support infrastructure of the first TEE.

Another example (e.g., example 14) relates to a previous example (e.g., example 13) or to any other example, wherein the support infrastructure includes a third TEE, wherein the third TEE hosts a first migration agent for the first TEE, wherein the fourth TEE hosts a second migration agent for the second TEE, and wherein the migration policy is embedded in one or more of the third and the fourth TEE.

Another example (e.g., example 15) relates to a previous example (e.g., example 14) or to any other example, wherein the support infrastructure includes a register for storing previous migrations, wherein the register is used for verifying an integrity of one or more of the first TEE and the second TEE for deciding on the migration.

Another example (e.g., example 16) relates to a previous example (e.g., any one of examples 13 to 15) or to any other example, wherein one or more of the first migration agent and the second migration agent is configured to extend the register based on the migration.

Another example (e.g., example 17) relates to a previous example (e.g., any one of examples 14 or 15) or to any other example, wherein the register includes an attestation history of previous migrations.

Another example (e.g., example 18) relates to a previous example (e.g., any one of examples 15 to 17) or to any other example, wherein the register is protected by a trusted entity.

Another example (e.g., example 19) relates to a previous example (e.g., example 18) or to any other example, wherein the trusted entity includes one or more of a root of trust and a TEE hypervisor.

Another example (e.g., example 20) relates to a previous example (e.g., any one of examples 13 to 19) or to any other example, wherein the migration policy indicates if the first migration agent or the second migration agent is to be configured for enforcing the migration policy.

Another example (e.g., example 21) relates to a previous example (e.g., any one of examples 13 to 15) or to any other example, wherein, if the second migration agent is configured for enforcing the migration policy, the method further includes: supplying a migration image to the second migration agent, wherein the migration image includes one or more of an image of the first TEE, an image of a register storing previous migrations, and attestation evidence; and verifying the migration image by the second migration agent.

Another example (e.g., example 22) relates to a previous example (e.g., example 20) or to any other example, wherein, if the first migration agent is configured for enforcing the migration policy, the method further includes: acquiring attestation evidence by the first migration agent.

Another example (e.g., example 23) relates to a previous example (e.g., any one of examples 13 to 22) or to any other example, wherein the migration policy includes an expected attestation value of one or more of the first and the second TEE, and wherein, if a measured attestation value corresponds to the expected attestation value, the method further comprises: deciding that the migration is allowed.

Another example (e.g., example 24) relates to a previous example (e.g., any one of examples 13 to 23) or to any other example, the method further including: overriding the migration policy based on a migration policy provisioned by an orchestration entity.

An example (e.g., example 25) relates to an apparatus including processor circuitry configured to carry out the method according to a previous example (e.g., any one of examples 13 to 24) or to any other example.

Another example (e.g., example 26) relates to a machine-readable medium including machine readable instructions, when executed, to implement a method or realize an apparatus according to a previous example (e.g., any one of examples 1 to 12) or to any other example.

Another example (e.g., example 27) relates to a computer program having a program code for performing the method of a previous example (e.g., any one of examples 13 to 24) or to any other example, when the computer program is executed on a computer, a processor, or a programmable hardware component.

The aspects and features described in relation to a particular one of the previous examples may also be combined with one or more of the further examples to replace an identical or similar feature of that further example or to additionally introduce the features into the further example.

Examples may further be or relate to a (computer) program including a program code to execute one or more of the above methods when the program is executed on a computer, processor or other programmable hardware component. Thus, steps, operations or processes of different ones of the methods described above may also be executed by programmed computers, processors or other programmable hardware components. Examples may also cover program storage devices, such as digital data storage media, which are machine-, processor- or computer-readable and encode and/or contain machine-executable, processor-executable or computer-executable programs and instructions. Program storage devices may include or be digital storage devices, magnetic storage media such as magnetic disks and magnetic tapes, hard disk drives, or optically readable digital data storage media, for example. Other examples may also include computers, processors, control units, (field) programmable logic arrays ((F)PLAs), (field) programmable gate arrays ((F)PGAs), graphics processor units (GPU), application-specific integrated circuits (ASICs), integrated circuits (ICs) or system-on-a-chip (SoCs) systems programmed to execute the steps of the methods described above.

It is further understood that the disclosure of several steps, processes, operations or functions disclosed in the description or claims shall not be construed to imply that these operations are necessarily dependent on the order described, unless explicitly stated in the individual case or necessary for technical reasons. Therefore, the previous description does not limit the execution of several steps or functions to a certain order. Furthermore, in further examples, a single step, function, process or operation may include and/or be broken up into several sub-steps, -functions, -processes or -operations.

If some aspects have been described in relation to a device or system, these aspects should also be understood as a description of the corresponding method. For example, a block, device or functional aspect of the device or system may correspond to a feature, such as a method step, of the corresponding method. Accordingly, aspects described in relation to a method shall also be understood as a description of a corresponding block, a corresponding element, a property or a functional feature of a corresponding device or a corresponding system.

The following claims are hereby incorporated in the detailed description, wherein each claim may stand on its own as a separate example. It should also be noted that although in the claims a dependent claim refers to a particular combination with one or more other claims, other examples may also include a combination of the dependent claim with the subject matter of any other dependent or independent claim. Such combinations are hereby explicitly proposed, unless it is stated in the individual case that a particular combination is not intended. Furthermore, features of a claim should also be included for any other independent claim, even if that claim is not directly defined as dependent on that other independent claim.

## Claims

1. An apparatus (100) comprising processing circuitry (130) configured to:
decide on a migration of a workload from a first trusted execution environment, TEE, to a second TEE according to a migration policy, wherein the migration policy is embedded into support infrastructure of the first TEE.

2. The apparatus (100) of claim 1, wherein the support infrastructure of the first TEE includes a third TEE, and wherein support infrastructure of the second TEE includes a fourth TEE, wherein the third TEE hosts a first migration agent for the first TEE, wherein the fourth TEE hosts a second migration agent for the second TEE, and wherein the migration policy is embedded in one or more of the third and the fourth TEE.

3. The apparatus (100) of claim 2, wherein the support infrastructure includes a register for storing previous migrations, wherein the register is used for verifying an integrity of one or more of the first TEE and the second TEE for deciding on the migration.

4. The apparatus (100) of claim 3, wherein one or more of the first migration agent and the second migration agent is configured to extend the register based on the migration.

5. The apparatus (100) of claim 3 or 4, wherein the register includes an attestation history of previous migrations.

6. The apparatus (100) of any one of claims 3 to 5, wherein the register is protected by a trusted entity.

7. The apparatus (100) of claim 6, wherein the trusted entity includes one or more of a root of trust and a TEE hypervisor.

8. The apparatus (100) of any one of claims 1 to 7, wherein the migration policy indicates if the first migration agent or the second migration agent is to be configured for enforcing the migration policy.

9. The apparatus (100) of claim 8, wherein, if the second migration agent is configured for enforcing the migration policy, the processing circuitry (130) is further configured to:
supply a migration image to the second migration agent, wherein the migration image includes one or more of an image of the first TEE, an image of a register storing previous migrations, and attestation evidence; and
verify the migration image by the second migration agent.

10. The apparatus (100) of claim 8 or 9, wherein, if the first migration agent is configured for enforcing the migration policy, the processing circuitry (130) is further configured to:
acquire attestation evidence by the first migration agent.

11. The apparatus (100) of any one of claims 1 to 10, wherein the migration policy includes an expected attestation value of one or more of the first and the second TEE, and wherein, if a measured attestation value corresponds to the expected attestation value, the processing circuitry is further to:
decide that the migration is allowed.

12. The apparatus (100) of any one of claims 1 to 11, wherein processing circuitry is further configured to:
override the migration policy based on a migration policy provisioned by an orchestration entity.

13. A method (200) comprising:
Deciding (210) on a migration of a workload from a first trusted execution environment, TEE, to a second TEE according to a migration policy, wherein the migration policy is embedded into support infrastructure of the first TEE.

14. The method (200) of claim 13, wherein the migration policy indicates if the first migration agent or the second migration agent is to be configured for enforcing the migration policy,
wherein, if the second migration agent is configured for enforcing the migration policy, the method further comprises:
supplying a migration image to the second migration agent, wherein the migration image includes one or more of an image of the first TEE, an image of a register storing previous migrations, and attestation evidence; and
verifying the migration image by the second migration agent
wherein, if the first migration agent is configured for enforcing the migration policy, the method further comprises:
acquiring attestation evidence by the first migration agent.

15. The method (200) of claim 13 or 14, further comprising:
overriding the migration policy based on a migration policy provisioned by an orchestration entity.
